# EUROPÄISCHE PATENTSCHRIFT

(11) **EP 3 681 818 B1**
(45) Veröffentlichungstag und Bekanntmachung des Hinweises auf die Patenterteilung: **03.01.2024**
(21) Anmeldenummer: 18765639.2
(22) Anmeldetag: 07.09.2018
(51) Int. Cl.: B65D 83/00, C08L 83/04

(54) **VERFAHREN ZUR VERPACKUNG VON SILICONMASSEN**
METHOD FOR PACKAGING SILICONE COMPOUNDS
PROCÉDÉ D'EMBALLAGE DES MATIÈRES DE SILICONE

(43) Veröffentlichungstag der Anmeldung: 22.07.2020
(73) Patentinhaber: Wacker Chemie AG, 81737 München (DE)
(72) Erfinder: SCHEIM, Uwe, 01640 Coswig (DE); SCHÖLEY, Peter, 01665 Diera-Zehren (DE)
(74) Vertreter: Fritz, Helmut
(86) Internationale Anmeldenummer: PCT/EP2018/074181
(87) Internationale Veröffentlichungsnummer: WO 2020/048616

(56) Entgegenhaltungen:
- WO-A2-2008/034060
- WO-A2-2017/187355
- US-A- 5 338 312

## Beschreibung

Die Erfindung betrifft ein Verfahren zur Verpackung von Siliconmassen in hohlzylindrische Behälter, die mit einem Kolben verschlossen werden und mit Siliconmassen gefüllte Kartuschen.

Verfahren zur Abfüllung von RTV1-Dichtmassen sind bekannt. Z WO2017/187355 offenbart ein Verfahren zur Verpackung von Siliconmassen in einen hohlzylindrischen Behälter, der mit einem Kolben verschlossen wird. Häufig werden sie in Gebinde abgefüllt, die eine einfache Anwendung ermöglichen. Besonders gebräuchlich ist die Verpackung in Kartuschen aus Polyethylen. Dabei ist es Stand der Technik, das zylinderförmige Kartuschen mit einem Kolben am unteren Ende verschlossen werden. Diese Kolben müssen die RTV1-Dichtmasse in der Kartusche möglichst effizient gegen ein Eindringen von Luftfeuchtigkeit schützen. Darüber hinaus müssen die Kolben, die in der Regel ebenfalls aus Polyethylen oder Polypropylen bestehen, wichtige weitere Anforderungen erfüllen. So sollen sich die Kolben z.B. möglichst leicht maschinell in die Kartusche einsetzen lassen. Dazu wird in der Regel der Kolben vor dem Setzen mit einem dünnflüssigen Siliconöl im Viskositätsbereich 350 mPas bis 1000 mPas benetzt. Das führt dazu, dass sich der Kolben leicht einführen und sich die vor dem Kolben in der Kartusche noch befindliche Luft leicht nach außen drücken lässt, sodass vor dem Kolben keine Luftblase zurückbleibt. Wie die Praxis zeigt, ist aber die erreichbare Dichtheit für eine längere Lagerung trotzdem nicht ausreichend. Der Kolben muss insbesondere auch während der ganzen Zeit der Lagerung weiterhin beweglich bleiben, da sich die Masse in der Kartusche bei Temperaturerhöhung ausdehnt und bei Temperaturerniedrigung zusammenzieht. Wenn die Beweglichkeit des Kolbens behindert ist, dann führt das im Falle der Temperaturerniedrigung dazu, dass in der Kartusche ein Unterdruck entsteht. Der Unterdruck wird ausgeglichen, indem Luft von außen angesaugt wird. Das führt zu vermehrter Aushärtung des Kartuscheninhalts vom Boden her. Es hat sich nun in der Praxis gezeigt, dass die Schmierung der Kolben mit niedrigviskosen Silikonölen keine grundsätzliche und dauerhafte Abhilfe gegen die unerwünschte Aushärtung in der Kartusche schafft. Das wurde bisher darauf zurückgeführt, dass Silikonöle eine hohe Wasserdampfdurchlässigkeit besitzen, so dass der Silikonölfilm keinen Schutz gegen eindringende Feuchtigkeit bildet. Es wurde daher nach Mitteln gesucht, die eine deutlich geringere Wasserdampfdurchlässigkeit besitzen und damit eine zusätzliche Abdichtung garantieren. DE-C1 4334754 beschreibt solche Mischungen bestehend aus Polybutenen und Wachsen. In dieser Schrift wird auch darauf hingewiesen, dass die Verwendung von hydrophoben Flüssigkeiten, wie zum Beispiel von Weichmachern, wie es die oben beschriebenen Siliconöle sind, ungenügend ist, da diese Materialien eine zu hohe Wasserdampfdurchlässigkeit besitzen und damit die Aushärtung im Bereich des Kolbenbodens nicht stark genug verhindert wird. Mit Einsatz des Polybutens kann eine sehr gute Abdichtung des Kolbens gegen die Kartuschenwand erreicht werden. Es hat sich aber gezeigt, dass die Mischung von Polybutenen mit Wachsen zu einer Verunreinigung des Inhalts der Kartusche führt, da diese Polymere mit Silicondichtmassen in der Regel nicht mischbar sind. Es kommt daher zu einer Schlierenbildung in der Dichtmasse am unteren Ende der Kartusche, was nicht erwünscht ist, da diese Schlieren auch nach der Aushärtung der Dichtmasse sichtbar bleiben. Darüber hinaus sind diese Mischungen durch ihre wachsähnliche Konsistenz auch schwer aufzutragen. Zudem wird die oben beschriebene notwendige dauerhafte Beweglichkeit des Kolbens auch nicht in jedem Fall durch die Polybuten/Wachs-Mischungen gewährleistet.

Gegenstand der Erfindung ist ein Verfahren zur Verpackung von Siliconmassen in einen hohlzylindrischen Behälter, der mit einem Kolben verschlossen wird, dadurch gekennzeichnet, dass in den Zwischenraum zwischen der Innenwand des hohlzylindrischen Behälters und der Außenfläche des Kolbens ein Siliconpolymer (A) mit einer Viskosität von 5 000 mPas bis 100 000 mPas, gemessen bei 25°C, eingebracht wird.

In der Praxis wird der mit einer Dichtmasse gefüllte hohlzylindrische Körper, der mit einem Kolben verschlossen ist, häufig Kartusche genannt. Im Rahmen der vorliegenden Erfindung wird dieses gesamte Paket, also der hohlzylindrische Behälter, die darin enthaltene Siliconmasse und mindestens ein Verschlusskolben, der auch zum Auspressen der Masse nach dem Öffnen der Kartusche verwendet wird, als Kartuschensystem bezeichnet. Der hohlzylindrische Behälter ist bevorzugt herstellerseitig an einer Stirnseite mit einem kreisförmigen Deckel verschlossen. Dieser Deckel kann so gestaltet sein, dass Ausspritzdüsen oder beliebige andere Vorrichtungen daran befestigt werden können. Diese Befestigung erfolgt bevorzugt über Gewinde mittels Aufschrauben.

Der gegebenenfalls an einer Seite verschlossene hohlzylindrische Behälter wird im Rahmen der vorliegenden Erfindung auch Leerkartusche bezeichnet.

Der Begriff hohlzylindrischer Behälter umfasst im Rahmen der Erfindung auch solche Behälter bzw. Leerkartuschen, die nicht ideal hohlzylindrisch sind, sondern herstellbedingt und/oder anwendungsoptimiert einen Durchmesser aufweisen, der über die gesamte Länge der Leerkartusche sowohl entlang der Mittelachse als auch im jeweiligen einzelnen Umfang um bevorzugt bis zu 5 % variieren kann.

Der Kolben selbst, mit dem der hohlzylindrische Behälter verschlossen wird, besteht aus der zylinderförmigen Wand, deren Außenfläche nach dem Setzen des Kolbens an der Innenseite der Leerkartusche anliegt, und dem kreisförmigen Kolbenboden, der an der abgefüllten Siliconmasse anliegt. Bevorzugt ist der Kolben an der nach außen zeigenden Seite offen. Er bildet also praktisch selbst einen zylindrischen Hohlkörper. Die jeweilige Stellung des Kolbens im hohlzylindrischen Behälter bestimmt die Größe des Hohlraumes.

Bei dem erfindungsgemäß eingesetzten hohlzylindrischen Behälter, der mit einem Kolben verschlossen wird, handelt es sich bevorzugt um handelsübliche Leerkartuschen, insbesondere solche aus Polyethylen, wie sie z.B. käuflich erhältlich sind bei Fischbach KG, Engelskirchen, Deutschland oder Ritter GmbH, Schwabmünchen, Deutschland. Ebenso handelt es sich bei den erfindungsgemäß eingesetzten Kolben bevorzugt um handelsübliche Produkte, die bei diesen Firmen erhältlich sind.

Bei den erfindungsgemäß zu verpackenden Siliconmassen kann es sich um beliebige Siliconmassen handeln, wie z.B. vernetzbare Siliconmassen, die als Kleb- bzw. Dichtstoffe eingesetzt werden können, bevorzugt um bei Raumtemperatur vernetzbare Siliconmassen, sog. RTV-1-Massen, welche bei Zutritt von Luftfeuchtigkeit aushärten.

Bevorzugt sind die erfindungsgemäß zu verpackenden Siliconmassen bei 20°C und 1013 hPa pastöse Stoffe mit Fließgrenzen von bevorzugt mehr als 500 Pa und Dichten bevorzugt zwischen 0,9 und 1,6 g/cm³. Eine typische Anwendung ist z.B. das Abdichten von Bauwerksfugen.

Bei den erfindungsgemäß eingesetzten Siliconpolymeren (A) handelt es sich bevorzugt um im Wesentlichen lineare Organopolysiloxane, besonders bevorzugt um solche der allgemeinen Formel

(R¹O)ₓR₍₃₋ₓ₎SiO(R₂SiO)_{z}SiR₍₃₋ₓ₎(OR¹)ₓ (I),

wobei
R gleich oder verschieden sein kann und einen einwertigen, SiCgebundenen, gegebenenfalls substituierten Kohlenwasserstoffrest bedeutet,
R¹ gleich oder verschieden sein kann und Wasserstoffatom oder einen einwertigen, gegebenenfalls substituierten Kohlenwasserstoffrest bedeutet, der gegebenenfalls durch Heteroatome, wie Sauerstoff oder Stickstoff, unterbrochen sein kann,
x 0, 1, 2 oder 3 ist und
z eine ganze Zahl von 20 bis 5000 darstellt.

Beispiele für einwertige, SiC-gebundene Kohlenwasserstoffreste R sind Alkylreste, wie der Methyl-, Ethyl-, n-Propyl-, iso-Propyl-, 1-n-Butyl-, 2-n-Butyl-, iso-Butyl-, tert-Butyl-, n-Pentyl-, iso-Pentyl-, neo-Pentyl-, tert-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl-, 2-Propenyl, n-5-Hexenyl-, 4-Vinylcyclohexyl- und der 3-Norbornenylrest; Arylreste, wie der Phenyl-, Biphenylyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Bevorzugt handelt es sich bei Rest R um einwertige, SiC-gebundene Kohlenwasserstoffreste mit 1 bis 18 Kohlenstoffatomen, besonders bevorzugt um den Methyl-, Ethyl-, Vinyl- oder Phenylrest, insbesondere um den Methyl- oder Vinylrest.

Beispiele für Rest R¹ sind die für R genannten Reste.

Bevorzugt handelt es sich bei Rest R¹ um Wasserstoffatom oder Alkylreste mit 1 bis 20 Kohlenstoffatomen, besonders bevorzugt um Wasserstoffatom, den Methylrest oder den Ethylrest.

Bevorzugt ist x gleich 0, 1 oder 2, besonders bevorzugt 0.

Bevorzugt handelt es sich bei den erfindungsgemäß eingesetzten Siliconpolymeren (A) um Bis(trialkylsiloxy)polydialkylsiloxan, α,ω-Dihydroxypolydialkylsiloxan oder Bis(dialkoxyalkylsiloxy)polydialkylsiloxan oder deren Mischungen, besonders bevorzugt um Bis(trialkylsiloxy)polydialkylsiloxan.

Die erfindungsgemäß bevorzugt eingesetzten, im Wesentlichen linearen Siloxane basierend auf D-Einheiten können herstellungsbedingt einen molaren Anteil von Verzweigungen, d.h. T- und/oder Q-Einheiten, von bevorzugt weniger als 5 %, besonders bevorzugt weniger als 1 %, aufweisen, jeweils bezogen auf die Summe aus D-, T- und Q-Einheiten.

Bei dem erfindungsgemäß eingesetzten Siliconpolymer (A) kann es sich um eine Art eines solchen Siliconpolymers wie auch um ein Gemisch aus mindestens zwei Arten von Siliconpolymeren handeln, mit der Maßgabe, dass Komponente (A) eine Viskosität im Bereich 5 000 mPas bis 100 000 mPas aufweist.

Falls es sich bei dem erfindungsgemäß eingesetzten Siliconpolymer (A) um Mischungen handelt, wie z.B. eine Mischung aus zwei oder mehreren Siloxanen der Formel (I) können zu deren Herstellung auch Siloxane verwendet werden, deren Viskosität unter 5 000 mPas oder über 10 000 mPas liegt, mit der Maßgabe, dass Komponente (A) eine Mischviskosität im Bereich 5 000 mPas bis 100 000 mPas aufweist.

Darüber hinaus können zur Herstellung der erfindungsgemäß eingesetzten Komponente (A) die Siliconpolymere auch mit organischen Lösungsmitteln (B) homogen gemischt werden, mit der Maßgabe, dass Komponente (A) eine Mischviskosität im Bereich 5 000 mPas bis 100 000 mPas aufweist.

Falls organische Lösungsmittel (B) eingesetzt werden, die auch das Auftragen der Komponente (A) erleichtern können, dann sind weitgehend aromatenfreie, lineare, verzweigte oder cyclische Kohlenwasserstoffe oder deren Gemische bevorzugt. Diese Kohlenwasserstoffe (B) weisen besonders bevorzugt keine substituierten Reste auf. Weiterhin bestehen sie bevorzugt zu mehr als 50 Mol-% aus gesättigten Kohlenstoff-Kohlenstoff-Bindungen.

Bevorzugt weisen die gegebenenfalls eingesetzten Kohlenwasserstoffe (B) jeweils beim Druck von 1000 hPa Siedepunkte von mehr als 150°C bzw. Siedebereiche, die bei 150°C beginnen, auf, insbesondere dann, wenn sie zum Verbleib in der zu verpackenden Masse bestimmt sind, oder Siedepunkte bis 100°C bzw. Siedebereiche endend mit 100°C auf, wenn sie zum Entfernen nach dem Auftrag der Komponente (A) bestimmt sind, wobei das Entfernen vor oder nach der Befüllung und dem Verschließen der Leerkartusche vollständig oder nur teilweise erfolgen.

Möglich, aber nicht bevorzugt, ist das Entfernen des gegebenenfalls eingesetzten Lösungsmittels (B) bei Temperaturen bis 100°C. Weiterhin oder zusätzlich kann die Entfernung des Lösungsmittels (B) durch Anwendung von Unterdruck unterstützt werden, wie beispielsweise bei Drücken von bis zu 5 mbar absolutem Druck.

Beispiele für die gegebenenfalls eingesetzten Lösungsmittel (B) sind entweder Kohlenwasserstoffe mit 13 bis 23 Kohlenstoffatomen, wie sie von der Firma Total unter dem Handelsnamen Hydroseal mit Siedebereichen (gemessen bei einem Druck von etwa 1000 hPa) von 230 bis 375°C und Viskositäten von 2,4 bis 10,3 mm²/s (gemessen bei 40°C) käuflich erhältlich sind oder Kohlenwasserstoffe mit 5 bis 8 Kohlenstoffatomen, wie z.B. Pentan, Hexan, Heptan, n-Octan oder 2-Methyl-Octan.

Falls zur Herstellung von Komponente (A) Lösungsmittel (B) eingesetzt werden, was jedoch nicht bevorzugt ist, handelt es sich um Mengen von bevorzugt weniger als 90 Gew.-%, besonders bevorzugt weniger als 50%, insbesondere weniger als 25%.

Ein weiterer Gegenstand der Erfindung sind mit Siliconmassen befüllte hohlzylindrische Behälter, dadurch gekennzeichnet, dass sich im Zwischenraum zwischen der Innenwand des hohlzylindrischen Behälters und der Außenfläche des Kolbens, mit dem dieser Behälter verschlossen wird, ein Siliconpolymer (A) mit einer Viskosität von 5 000 mPas bis 100 000 mPas, gemessen bei 25°C, befindet.

Bei dem erfindungsgemäßen Verfahren kann das eingesetzte Siliconpolymer (A) vor dem Befüllen der Leerkartusche auf der Innenwand am unteren Ende der Leerkartusche und/oder nach dem Befüllen und vor dem Verschließen der Leerkartusche mit dem Kolben auf der Außenfläche der Kolbenwandung aufgebracht werden. Das Siliconpolymer (A) kann dabei durch bekannte Verfahren, wie z.B. durch Rollen, Spritzen, Pinseln, Streichen oder Tauchen auf die entsprechenden Flächen aufgebracht werden.

Falls Siliconpolymer (A) auf der Innenwand der Leerkartusche aufgebracht wird, handelt es sich bevorzugt um den Teilbereich am unteren Ende, also in einem Bereich vom unteren Rand der Leerkartusche bis zu ca. 5 cm in axialer Richtung zum anderen Ende der Leerkartusche. Es kann aber auch, falls erwünscht, Siliconpolymer (A) auf die gesamte Innenwand der Leerkartusche aufgebracht werden, was jedoch nicht bevorzugt ist.

Falls Siliconpolymer (A) auf der Innenwand der Leerkartusche aufgebracht wird, erfolgt dies bevorzugt durch Pinseln oder Streichen.

Falls Siliconpolymer (A) auf dem Kolben aufgebracht wird, erfolgt dies bevorzugt durch Pinseln oder Streichen.

Die aufgebrachte Menge an erfindungsgemäß eingesetztem Siliconpolymer (A) beträgt bevorzugt 0,001 g/cm² bis 0,5 g/cm², besonders bevorzugt 0,005 g/cm² bis 0,1 g/cm², insbesondere 0,01 g/cm² bis 0,02 g/cm².

In einer Variante des erfindungsgemäßen Verfahrens (V1) wird Siliconpolymer (A) ausschließlich und vor dem Befüllen der Leerkartusche auf der Innenwand der Leerkartusche aufgebracht.

In einer weiteren Variante des erfindungsgemäßen Verfahrens (V2) wird Siliconpolymer (A) ausschließlich und vor dem Verschließen der mit der Siliconmasse befüllten Leerkartusche mit dem Kolben auf der Außenfläche der Kolbenwandung aufgebracht.

Bevorzugt wird dabei eine Menge 0,005 g/cm² bis 0,1 g/cm², insbesondere 0,01 g/cm² bis 0,1 g/cm².

In einer weiteren Variante des erfindungsgemäßen Verfahrens (V3) wird Siliconpolymer (A) sowohl vor dem Befüllen der Leerkartusche auf der Leerkartuscheninnenwand am unteren Ende der Leerkartusche sowie nach dem Befüllen und vor dem Verschließen der Kartusche mit dem Kolben auf der Außenfläche der Kolbenwandung aufgebracht.

Bei dem erfindungsgemäßen Verfahren wird Variante (V2) bevorzugt.

Das erfindungsgemäße Verfahren einschließlich aller Varianten wird bevorzugt bei den Bedingungen durchgeführt, die üblicherweise zur Abfüllung von Siliconmassen angewandt werden, bevorzugt bei einem Druck der umgebenden Atmosphäre, also etwa bei 1013 hPa, und bei Raumtemperatur, also bei etwa 23°C, sowie bei einer relativen Luftfeuchtigkeit von etwa 50 %.

Überraschenderweise wurde nun gefunden, dass sich Siliconpolymere mit einer dynamischen Viskosität von 5 000 mPas bis 100 000 mPas, gemessen bei 25°C, trotz der hohen Wasserdampfdurchlässigkeit hervorragend eignen, den Zwischenraum zwischen Kolben und der Innenwand des hohlzylindrischen Behälters dauerhaft abzudichten und die Gleitfähigkeit des Kolbens über eine lange Lagerdauer zu gewährleisten.

Das erfindungsgemäße Verfahren hat den Vorteil, dass auch handelsübliche Kartuschensysteme, die hochreaktive Dichtmassen enthalten, unter anspruchsvollen klimatischen Bedingungen über lange Zeiträume gelagert werden können, ohne dass es zu unerwünschten Reaktionen der verpackten Siliconmassen kommt.

Das erfindungsgemäße Verfahren hat den Vorteil, dass die Kolben sehr leicht automatisch in die Leerkartusche eingeführt werden können (sogenanntes Kolbensetzen).

Das erfindungsgemäße Verfahren hat den Vorteil, dass die Abfüllung der Dichtmasse blasenfrei erfolgen kann, das heißt, es wird keine Luft zwischen Kolbenboden und Dichtmasse eingeschlossen.

Das erfindungsgemäße Verfahren hat den Vorteil, dass sich auch bei häufigem Temperaturwechsel keine Gasblasen zwischen Kolbenboden und Dichtmasse bilden.

In den nachstehend beschriebenen Beispielen beziehen sich alle Viskositätsangaben, sofern nicht anders angegeben, auf eine Temperatur von 25°C. Sofern nicht anders angegeben, werden die nachstehenden Beispiele bei einem Druck der umgebenden Atmosphäre, also etwa bei 1013 hPa, und bei Raumtemperatur, also bei etwa 23°C, sowie bei einer relativen Luftfeuchtigkeit von etwa 50 % durchgeführt. Des Weiteren beziehen sich alle Angaben von Teilen und Prozentsätzen, soweit nichts Anderes angegeben ist, auf das Gewicht.

Im Rahmen der vorliegenden Erfindung wird die dynamische Viskosität der erfindungsgemäß eingesetzten Komponente (A) nach DIN 53019, sofern nicht anders angegeben, bei 25°C mittels eines Rotationsrheometers "Physica MCR 300" von der Firma Anton Paar gemessen. Dabei wird für größer als 200 mPa·s ein Kegel-Platte-Messsystem (Searle-System mit Messkegel CP 50-1) verwendet. Die Schergeschwindigkeit wird der Polymerviskosität angepasst: 5000 bis 9999 mPa·s bei 62 1/s; 10000 bis 12499 mPa·s bei 50 1/s; 12500 bis 15999 mPa·s bei 38,5 1/s; 16000 bis 19999 mPa·s bei 33 1/s; 20000 bis 24999 mPa·s bei 25 1/s; 25000 bis 29999 mPa·s bei 20 1/s; 30000 bis 39999 mPa·s bei 17 1/s; 40000 bis 59999 mPa·s bei 10 1/s; 60000 bis 149999 bei 5 1/s.

Nach Temperierung des Messsystems auf die Messtemperatur wird ein dreistufiges Messprogramm bestehend aus einer Einlaufphase, einer Vorscherung und Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit, bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 Sekunden durchgeführt, aus denen der Mittelwert bestimmt wird. Der Mittelwert entspricht der dynamischen Viskosität, die in mPa·s angegeben wird.

### Beispiel 1

### Abfüllung

Zum Untersuchen der Effizienz des Verfahrens wurde eine handelsübliche acetatvernetzende Silikondichtmasse, erhältlich bei der Wacker Chemie AG, D-München, unter der Bezeichnung ELASTOSIL^{®} 6000, in handelsübliche Leerkartuschen aus Polyethylen des Typs E310 der Fa. Fischbach KG, D-Engelskirchen, gefüllt. Die Leerkartuschen wurden mit einer handelsüblichen Abfüllanlage gefüllt und mit einem HDPE-Kolben des Typs K02 der Fa. Fischbach verschlossen. Auf den äußeren Umfang der Kolbenwandung wurde unmittelbar vorher ein α,ω-Bis(trimethylsiloxy)-polydimethylsiloxan mit einer Viskosität von 12 500 mPas mit einem Pinsel aufgestrichen. Die aufgetragene Ölmenge betrug 0,2 g. Es wurde somit eine Auftragsmenge von ca. 0,01 g/cm² erreicht.

### Lagerung

Anschließend wurden 10 Proben des so erhaltenen Kartuschensystems in einem Klimaschrank 8 Wochen wie folgt gelagert: Beginnend bei 23°C und 50% Luftfeuchtigkeit wurde zunächst auf 5°C und 95% Luftfeuchtigkeit innerhalb einer Stunde abgekühlt, dann für 11 Stunden auf diesem Niveau gehalten, anschließend innerhalb einer Stunde auf 50°C und 95% Luftfeuchtigkeit erwärmt und wiederum für 11 Stunden gehalten. Danach wurde auf 5°C und 95% rel. Luftfeuchtigkeit innerhalb eine Stunde abgekühlt und dieser Zyklus insgesamt 8 Wochen lang durchgeführt. Alle 2 Wochen wurden je zwei Kartuschen entnommen für 24h bei 23°C und 50%iger relativer Luftfeuchte konditioniert und der Länge nach aufgeschnitten. Das am Kolbenboden ausgehärtete Material wurde entnommen, mechanisch mit einem Spatel von nicht ausgehärtetem Material befreit und ausgewogen. In Tabelle 1 sind die Mittelwerte der Messungen aufgelistet.

### Vergleichsbeispiel 2

### Abfüllung

Der Versuch gemäß Beispiel 1 wurde wiederholt, mit der Abänderung, dass anstelle des α,ω-Bis(trimethylsiloxy)polydimethylsiloxans mit einer Viskosität von 12 500 mPas ein α,ω-Bis(trimethylsiloxy)polydimethylsiloxan mit einer Viskosität von 350 mPas verwendet wurde.

### Lagerung

Die Lagerung der Proben erfolgte so wie in Beispiel 1 beschrieben. In Tabelle 1 sind die Mittelwerte der Messungen aufgelistet.

### Vergleichsbeispiel 3

### Abfüllung

Der Versuch gemäß Beispiel 1 wurde wiederholt. Die Ölung des Kolbens wurde unterlassen.

### Lagerung

Die Lagerung der Proben erfolgte so wie in Beispiel 1 beschrieben. In Tabelle 1 sind die Mittelwerte der Messungen aufgelistet.

### Vergleichsbeispiel 4

### Abfüllung

Der Versuch gemäß Beispiel 1 wurde wiederholt, mit der Abänderung, dass die Kartusche am unteren Ende innen mit einem Polybuten beschichtet wurde.

### Lagerung

Die Lagerung der Proben erfolgte so wie in Beispiel 1 beschrieben. In Tabelle 1 sind die Mittelwerte der Messungen aufgelistet.

### Beispiel 5

### Abfüllung

Der Versuch gemäß Beispiel 1 wurde wiederholt, mit der Abänderung, dass anstelle von α,ω-Bis(trimethylsiloxy)polydimethylsiloxan mit einer Viskosität von 12 500 mPas ein α,ω-Bis(trimethylsiloxy)polydimethylsiloxan mit einer Viskosität von 5000 mPas verwendet wurde.

### Lagerung

Die Lagerung der Proben erfolgte so wie in Beispiel 1 beschrieben. In Tabelle 1 sind die Mittelwerte der Messungen aufgelistet.

### Beispiel 6

### Abfüllung

Der Versuch gemäß Beispiel 1 wurde wiederholt, mit der Abänderung, dass anstelle von α,ω-Bis(trimethylsiloxy)polydimethylsiloxan mit einer Viskosität von 12 500 mPas ein α,ω-Bis(trimethylsiloxy)polydimethylsiloxan mit einer Viskosität von 60000 mPas verwendet wurde.

### Lagerung

Die Lagerung der Proben erfolgte so wie in Beispiel 1 beschrieben. Die Kartuschen wurden dem in Beispiel 1 beschriebenen Test unterzogen. In Tabelle 1 sind die Mittelwerte der Messungen aufgelistet.

### Beispiel 7

### Abfüllung

Der Versuch gemäß Beispiel 1 wurde wiederholt, mit der Abänderung, dass anstelle von α,ω-Bis(trimethylsiloxy)polydimethylsiloxan mit einer Viskosität von 12 500 mPas ein α,ω-Dihydroxypolydimethylsiloxan mit einer Viskosität von 75000 mPas verwendet wurde.

### Lagerung

Die Lagerung der Proben erfolgte so wie in Beispiel 1 beschrieben. In Tabelle 1 sind die Mittelwerte der Messungen aufgelistet.

### Beispiel 8

### Abfüllung

Der Versuch gemäß Beispiel 1 wurde wiederholt, mit der Abänderung, dass anstelle von α,ω-Bis(trimethylsiloxy)polydimethylsiloxan mit einer Viskosität von 12 500 mPas eine Mischung aus 85 Gew.-% eines α,ω-Bis(dimethoxymethylsiloxy)polydimethylsiloxans mit einer Viskosität von 350 000 mPas und 15 Gew.-% eines α,ω-Bis(trimethylsiloxy)polydimethylsiloxans mit einer Viskosität von 100 mPas verwendet wurde, wobei das Gemisch eine Viskosität von 80 000 mPas hatte.

### Lagerung

Die Lagerung der Proben erfolgte so wie in Beispiel 1 beschrieben. In Tabelle 1 sind die Mittelwerte der Messungen aufgelistet.

### Beispiel 9

### Abfüllung

Der Versuch gemäß Beispiel 1 wurde wiederholt, mit der Abänderung, dass anstelle von α,ω-Bis(trimethylsiloxy)polydimethylsiloxan mit einer Viskosität von 12 500 mPas eine Mischung aus 90 Gew.-% eines α,ω-Dihydroxypolydimethylsiloxans mit einer Viskosität von 75000 mPas und 10 Gew.-% eines α,ω-Bis(trimethylsiloxy)polydimethylsiloxans mit einer Viskosität von 12500 mPas verwendet wurde, wobei das Gemisch eine Viskosität von 65000 mPas hatte.

### Lagerung

Die Lagerung der Proben erfolgte so wie in Beispiel 1 beschrieben. In Tabelle 1 sind die Mittelwerte der Messungen aufgelistet.

### Beispiel 10

### Abfüllung

Der Versuch gemäß Beispiel 1 wurde wiederholt, mit der Abänderung, dass anstelle von 0,2 g Siliconöl 0,1 g Siliconöl eingesetzt wurden, was einer Auftragsmenge von ca. 0,005 g/cm² entspricht, und der Auftrag mit einer automatischen Rollvorrichtung erfolgte, mit der ein schwammartiges, gummielastisches Material vollumfänglich über die äußere Kolbenwandung gestrichen wurde.

### Lagerung

Die Lagerung der Proben erfolgte so wie in Beispiel 1 beschrieben. In Tabelle 1 sind die Mittelwerte der Messungen aufgelistet.

**Tabelle 1:**

| **Ausgehärtetes Material in [g] nach** | **2 Wochen** | **4 Wochen** | **6 Wochen** | **8 Wochen** |
|---|---|---|---|---|
| Beispiel 1 | 0,0 | 1,0 | 4,0 | 15,3 |
| Vergleichsbeispiel 2 | 0,0 | 2,3 | 8,0 | 28,4 |
| Vergleichsbeispiel 3 | 0,0 | 1,5 | 9,0 | 33,0 |
| Vergleichsbeispiel 4 | 0,0 | 16,5 | -* | 44,0 |
| Beispiel 5 | 0,0 | 0,0 | 3,0 | 11,5 |
| Beispiel 6 | 0,0 | 0,0 | 3,0 | 11,6 |
| Beispiel 7 | 0,0 | 1,20 | 5,0 | 20,5 |
| Beispiel 8 | 0,0 | 1,1 | 4,9 | 22,0 |
| Beispiel 9 | 0,0 | 1,2 | 4,8 | 21,0 |
| Beispiel 10 | 0,0 | 0,9 | 3,8 | 14,05 |

| | | | | |
|---|---|---|---|---|
| *)nicht gemessen | | | | |

## Patentansprüche

1. Verfahren zur Verpackung von Siliconmassen in einen hohlzylindrischen Behälter, der mit einem Kolben verschlossen wird, **dadurch gekennzeichnet, dass** in dem Zwischenraum zwischen der Innenwand des hohlzylindrischen Behälters und der Außenfläche des Kolbens ein Siliconpolymer (A) mit einer Viskosität von 5 000 mPas bis 100 000 mPas, gemessen bei 25°C, eingebracht wird,
wobei die dynamische Viskosität der Komponente (A) gemessen wird, wie in der Beschreibung beschrieben.

2. Verfahren nach Anspruch 1, **dadurch gekennzeichnet, dass** es sich bei den eingesetzten Siliconpolymeren (A) um im Wesentlichen lineare Organopolysiloxane handelt.

3. Verfahren nach Anspruch 1 oder 2, **dadurch gekennzeichnet, dass** es sich bei den eingesetzten Siliconpolymeren (A) um solche der allgemeinen Formel
(R¹O)ₓR₍₃₋ₓ₎SiO(R₂SiO)_{z}SiR₍₃₋ₓ₎(OR¹)ₓ (I)
handelt, wobei
R gleich oder verschieden sein kann und einen einwertigen, SiCgebundenen, gegebenenfalls substituierten Kohlenwasserstoffrest bedeutet,
R¹ gleich oder verschieden sein kann und Wasserstoffatom oder einen einwertigen, gegebenenfalls substituierten Kohlenwasserstoffrest bedeutet, der gegebenenfalls durch Heteroatome, wie Sauerstoff oder Stickstoff, unterbrochen sein kann,
x 0, 1, 2 oder 3 ist und
z eine ganze Zahl von 20 bis 5000 darstellt.

4. Verfahren nach einem oder mehreren der Ansprüche 1 bis 3, **dadurch gekennzeichnet, dass** es sich bei den eingesetzten Si liconpolymeren (A) um Bis(trialkylsiloxy)polydialkylsiloxan, α,ω-Dihydroxypolydialkylsiloxan oder Bis(dialkoxyalkylsiloxy)polydialkylsiloxan oder deren Mischungen handelt.

5. Verfahren nach einem oder mehreren der Ansprüche 1 bis 4, **dadurch gekennzeichnet, dass** die aufgebrachte Menge an eingesetztem Siliconpolymer (A) 0,001 g/cm² bis 0,5 g/cm² beträgt.

6. Verfahren nach einem oder mehreren der Ansprüche 1 bis 5, **dadurch gekennzeichnet, dass** Siliconpolymer (A) ausschließlich und vor dem Verschließen der mit der Siliconmasse befüllten Leerkartusche mit dem Kolben auf der Außenfläche der Kolbenwandung aufgebracht wird.

7. Mit Siliconmassen befüllte hohlzylindrische Behälter, **dadurch gekennzeichnet, dass** sich im Zwischenraum zwischen der Innenwand des hohlzylindrischen Behälters und der Außenfläche des Kolbens, mit dem dieser Behälter verschlossen wird, ein Siliconpolymer (A) mit einer Viskosität von 5 000 mPas bis 100 000 mPas, gemessen bei 25°C, befindet,
wobei die dynamische Viskosität der Komponente (A) gemessen wird, wie in der Beschreibung beschrieben.

## Claims

1. Process for packaging silicone compositions in a hollow cylindrical container, which is sealed with a plunger, **characterized in that** in the gap between the inner wall of the hollow cylindrical container and the outer surface of the plunger, a silicone polymer (A) is introduced having a viscosity of 5000 mPas to 100 000 mPas, measured at 25°C, wherein the dynamic viscosity of the component (A) is measured as described in the description.

2. Process according to Claim 1, **characterized in that** the silicone polymers (A) used are essentially linear organopolysiloxanes.

3. Process according to Claim 1 or 2, **characterized in that** the silicone polymers (A) used are those of the general formula
(R¹O)ₓR₍₃₋ₓ₎SiO(R₂SiO)_{z}SiR₍₃₋ₓ₎(OR¹)ₓ (I)
where
R may be identical or different and is a monovalent, SiC-bonded, optionally substituted hydrocarbon radical,
R¹ may be identical or different and is a hydrogen atom or a monovalent, optionally substituted hydrocarbon radical, which may optionally be interrupted by heteroatoms such as oxygen or nitrogen,
x is 0, 1, 2 or 3 and
z is an integer from 20 to 5000.

4. Process according to one or more of Claims 1 to 3, **characterized in that** the silicone polymers (A) used are bis(trialkylsiloxy)polydialkylsiloxane, α,ω-dihydroxypolydialkylsiloxane or bis(dialkoxyalkylsiloxy)polydialkylsiloxane or mixtures thereof.

5. Process according to one or more of Claims 1 to 4, **characterized in that** the applied amount of silicone polymer (A) used is from 0.001 g/cm² to 0.5 g/cm².

6. Process according to one or more of Claims 1 to 5, **characterized in that** silicone polymer (A) is applied exclusively to the outer surface of the plunger wall prior to the sealing of the empty cartridge filled with the silicone composition with the plunger.

7. Hollow cylindrical container filled with a silicone composition, **characterized in that** in the gap between the inner wall of the hollow cylindrical container and the outer surface of the plunger, with which said container is sealed, there is a silicone polymer (A) having a viscosity of 5000 mPas to 100 000 mPas, measured at 25°C, wherein the dynamic viscosity of the component (A) is measured as described in the description.

## Revendications

1. Procédé d'emballage de masses de silicone dans un récipient cylindrique creux obturé par un piston, **caractérisé en ce qu'**un polymère de silicone (A) ayant une viscosité de 5 000 mPa.s à 100 000 mPa.s, mesurée à 25°C, est introduit dans l'espace intermédiaire entre la paroi intérieure du récipient cylindrique creux et la surface extérieure du piston, la viscosité dynamique du composant (A) étant mesurée comme décrit dans la description.

2. Procédé selon la revendication 1, **caractérisé en ce que** les polymères de silicone (A) utilisés sont des organopolysiloxanes essentiellement linéaires.

3. Procédé selon la revendication 1 ou 2, **caractérisé en ce que** les polymères de silicone (A) utilisés sont de tels polymères de formule générale
(R¹O)ₓR₍₃₋ₓ₎SiO(R₂SiO)_{z}SiR₍₃₋ₓ₎(OR¹)ₓ (I)
dans laquelle
R peut être identique ou différent et représente un radical hydrocarboné monovalent, lié à SiC, éventuellement substitué,
R¹ peut être identique ou différent et représente un atome d'hydrogène ou un radical hydrocarboné monovalent, éventuellement substitué, qui peut être éventuellement interrompu par des hétéroatomes tels que l'oxygène ou l'azote,
x représente 0, 1, 2 ou 3 et
z représente un nombre entier de 20 à 5 000.

4. Procédé selon l'une ou plusieurs des revendications 1 à 3, **caractérisé en ce que** les polymères de silicone à utiliser sont un bis(trialkylsiloxy)polydialkylsiloxane, un α,ω-dihydroxypolydialkylsiloxane ou un bis(dialcoxyalkylsiloxy)polydialkylsiloxane, ou des mélanges de ceux-ci.

5. Procédé selon l'une ou plusieurs des revendications 1 à 4, **caractérisé en ce que** la quantité appliquée du polymère de silicone (A) utilisé est de 0,001 g/cm² à 0,5 g/cm².

6. Procédé selon l'une ou plusieurs des revendications 1 à 5, **caractérisé en ce que** le polymère de silicone (A) est appliqué sur la surface extérieure de la paroi du piston exclusivement et avant l'obturation, avec le piston, de la cartouche vide remplie de la masse de silicone.

7. Récipient cylindrique creux rempli de masses de silicone, **caractérisé en ce qu'**un polymère de silicone (A) ayant une viscosité de 5 000 mPa.s à 100 000 mPa.s, mesurée à 25 °C, se trouve dans l'espace intermédiaire entre la paroi intérieure du récipient cylindrique creux et la surface extérieure du piston à l'aide duquel ce récipient est obturé, la viscosité dynamique du composant (A) étant mesurée comme décrit dans la description.
